# EUROPEAN PATENT APPLICATION

(11) **EP 2 237 493 A1**
(43) Date of publication of application: **06.10.2010**
(21) Application number: 09004678.0
(22) Date of filing: 31.03.2009
(51) Int. Cl.: H04L 12/56, H04W 28/12

(54) **Network entities and a method for controlling congestions in communications networks**

(71) Applicant: Nokia Siemens Networks OY, 02610 Espoo (FI)
(72) Inventor: Cullen, Steven, Astoria Oregon 97103 (US)

(57) **Abstract**

The present invention refers to controlling of congestions in a communications network, according to which congestion information concerning a sub network of said communications network, in which a congestion is occurred, is provided to a network entity, which enables communication from and/or to said sub network in said communications network; and limit of communications capacity of at least one communicating network entity of said sub network of said communications network, which uses a congested resource of said sub network of said communications network and/or which is cause for said congestion, is changed by said network entity by use of said congestion information.

## Description

### FIELD OF THE INVENTION

The present invention refers to improving of handling of congestions in communications networks. In particular, the present invention refers to network entities and to a method configured for controlling congestions in communications networks.

### BACKGROUND OF THE INVENTION

Nowadays, arrangements of a network architecture of a communications network like a telecommunications network become more and more flat. However, at the same time the network architecture becomes more distributed, also on the source side.

Such communications networks can be, for example, communications networks based on 2G (second-generation wireless telephone technology), 3G (third-generation wireless telephone technology), LTE (Long Term Evolution), or IMT-A (International Mobile Telecommunications-Advanced) system. The present invention is not limited to a particular kind of communications networks.

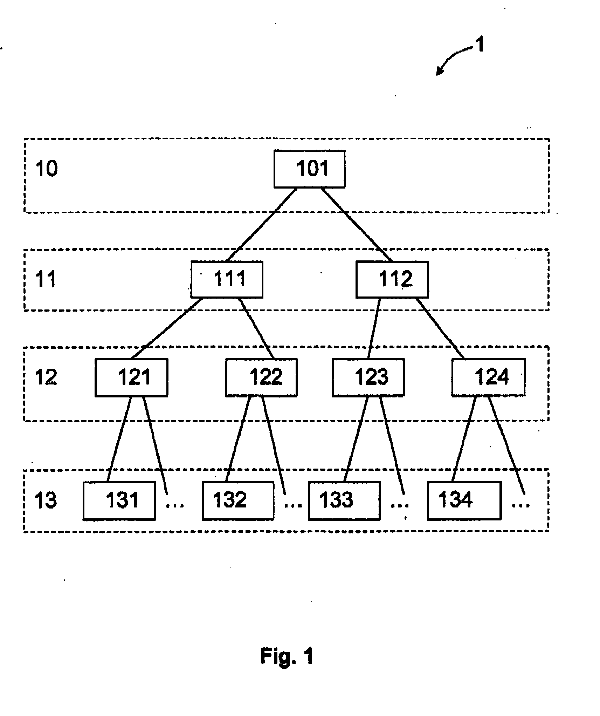

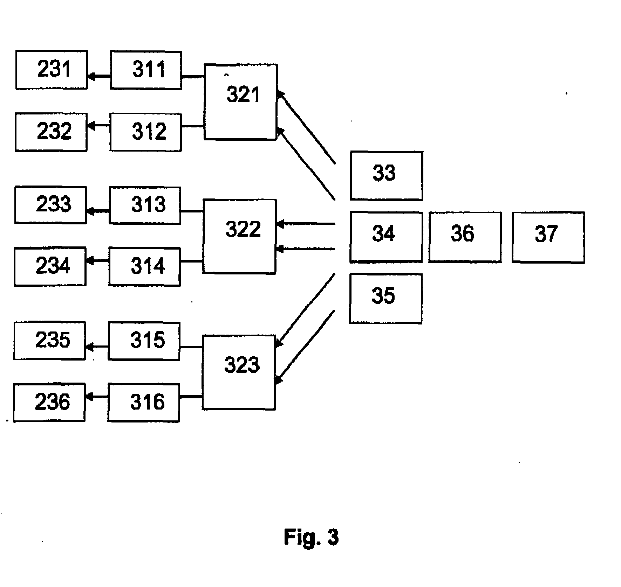

Fig. 1 shows an example of a former network architecture 1, where strong hierarchical connections and relations between the nodes, components, or elements respectively 101, 111, 112, 121, 122, 123, 124, 131, 132, 133, 134 of the communications network are provided. The former network architecture 1 is characterized by its hierarchical arrangement. According to Fig. 1, four levels 10, 11, 12, 13 of hierarchy are provided. The top level 10 corresponds, e.g., to a core network level and comprises according to Fig. 1 a node 101 representing a core network (CN). The next level 11 of the hierarchical architecture 1 represents, e.g., a gateway node level and comprises two gateways (GW) 111, 112 enabling access from and/or to the CN 101. Level 12, in turn, refers to a base station level and comprises four base stations (BS) 121, 122, 123, 124. Due to the hierarchical character of the architecture 1, each BS 121, 122, 123, 124 is dedicated to one GW 111, 112 only. The bottom level 13 of Fig. 3 represents according to the example of Fig. 1 a user equipment level and comprises user equipments (UE) 131, 132, 133, 134 communicating with the CN 101 via BSs 121, 122, 123, 124.

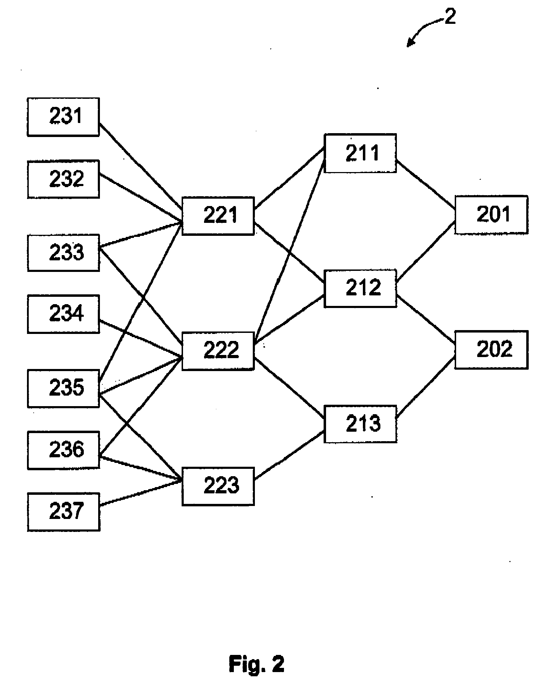

Fig. 2, in turn, shows a network architecture 2 becoming more and more common in communications networks nowadays. The nodes, components, or elements respectively 201, 202, 211, 212, 213, 221, 222, 223, 231, 232, 233, 234, 235, 236, 237 provided in the communications network according to the network architecture 2 do not have strong hierarchical relations between nodes, components, or elements of several levels. According to architecture 2 of Fig. 2, a node, component, or element of a lower or subordinated level can be connected to one and to more than one node, component, or element of the higher or superordinated level. Thus, UEs 231, 232, 233, 234, 235, 236 are connected to one or more than one BS 221, 222, 223; BSs 221, 222, 223 are connected to one or more than one GW 211, 212, 213; and a GW 211, 212, 213 is connected to one or more than one CN 201, 202.

The present invention refers to communications networks organized according to a flat and more distributed architecture as visualized exemplary in Fig. 2. Here, it has to be noted that the methodology of the present invention can be applied also to classic network architecture as depicted in Fig. 1.

However, in pursuance of such flat and distributed architectures, congestion for the traffic can happen in multiple places and for different reasons in communications networks. The congestion can happen e.g. in air interface, transport or in network element internal resources. In case of congestion, the excessive traffic is dropped. Best effort is served if no QoS (Quality of Service) is implemented.

Further, the core network does not have any possibility to react to the specific congestion causes in the different edges of the communications network.

Fig. 3 points out exemplary some reasons for congestion in a communications network from point of view of a BS. Here, it has to be noted that a BS can be also a base transceiver station (BTS) or Node-B, for example. In general, each node, component, or element in a communications network may have different kinds of limitations. This is shown also by example of Fig. 3, where BS and UEs 231 to 236 have different kinds of limitations. The UEs 231 to 236 can have their specific limitations 311 to 316. Thus, for example, the UEs 231 to 236 can have different capabilities to use air interface. A BS (not shown in Fig. 3) serving the UEs 231 to 236 can have multiple cells, wherein each of the cells also has its own limitations 321, 322, 323. Such limitations 321, 322, 323 can arise, e.g., due to available radio conditions in the corresponding cell and influence or limit the operating of the UEs 231 to 236. Thus, cell limitations 321, 322, 323 arise additionally to the UE limitations 311 to 316 with regard to the corresponding UEs 231 to 236. According to Fig. 3, UEs 231 and 232 are located in a cell having the limitations 321, thus, the UEs 231 and 232 have their own limitations 311, 312 and the corresponding cell limitations 321. Similarly, the UEs 233, 234 have cell limitations 322 and the UEs 235, 236 have cell limitation 323 additionally to their own and specific limitations 313, 314, 315, 316.

Further, a BS can also have common limitations 33, 34, 35, 36, 37 that are common for all UEs 231 to 236 served by the BS or at least for a part of the UEs 231 to 236. Such common limitations limiting operating of the BS and at least of a part of UEs 231 to 236 served by the BS can be, for example, hardware limitations 33, capacity licences 34, software limitations 35, transport limitations 36, and/or BS limitations 37. Here, hardware limitations 33 can limit, for example, the highest capacity per one BS, cell, and/or UE. With capacity licensing 34, the amount or rate of service traffic is limited. Transport limitations 36 can be common, for example, for all UEs 231 to 236 or at least for part of them.

Such limitations 311 to 316, 321 to 316, 321 to 323, and/or 33 to 37 will cause uncontrolled packet loss in communications network, especially in downlink, when packets from multiple entities are received by the BS.

If only one or few users is/are operating in a cell, the user can consume the whole cell capacity and congest the cell or BS according to its needs. However, if the cell is shared by a plurality of users, the service level is not as expected. The best effort in this case is the equal treatment of all users. However, this is a challenging task in the real life.

Thus, here is still a need for improving of handling, i.e., controlling congestions in communications networks.

### SUMMARY OF THE INVENTION

Object of the present invention is improving of controlling congestions in communications networks.

This object is achieved by a network entity comprising features according to claim 1, a network entity comprising features according to claim 4, a method comprising features according to claim 11.

Further embodiments of the present invention are provided with the corresponding dependent claims.

The object of the present invention is achieved by a network entity, said network entity being configured for controlling congestions in a communications network, wherein said network entity comprises:
- a receiving module, wherein said receiving module is configured for receiving congestion information concerning a sub network of said communications network, in which a congestion is occurred; and
- a communications capacity limit changing module, wherein said communications capacity limit changing module is configured for changing a limit of a communications capacity of at least one such communicating network entity of said sub network of said communications network, which uses a congested resource of said sub network of said communications network and/or which is cause for said congestion, by use of said congestion information;
said network entity being an entity enabling communication from and/or to said sub network in said communications network.

According to an embodiment of the present invention, said communications capacity limit changing module is configured for changing communication capacity by performing at least one of the following:
- configuring of reference portion of capacity of a base station used by gateways connected to the base station;
- configuring of reference portion of capacity of a gateway used by base stations connected to said gateway;
- allocating at least one soft licence to a network entity of said sub network, shared by such entities of said sub network data communication of which leads to said congestion;
- configuring of reference portion of capacity of a client connected to a server; or
- configuring of the capacity portions or absolute values between a server and its connected clients.

According to an embodiment of the present invention, said network entity is a core network, an operation and maintenance subsystem entity, or a control plane gateway with, e.g., mobility management function in said communications network.

Further, the object of the present invention is achieved by a network entity which is configured for controlling congestions in a communications network, wherein said network entity comprises an information providing module, wherein said information providing module is configured to provide congestion information concerning a sub network of said communications network, in which a congestion is occurred, to a further network entity, which enables communication from and/or to said sub network in said communications network.

According to an embodiment of the present invention, said congestion information comprises information about:
- the cause of congestion in said sub network of said communications network;
- capacity of said sub network of said communications network; and
- use of resources of said communications network in said sub network of said communications network.

According to an embodiment of the present invention, said congestion information comprises information about user equipment entities in said sub network.

According to an embodiment of the present invention, said congestion information comprises information about usage of resources in said sub network while a certain period of time.

According to an embodiment of the present invention, said network entity is an entity of said sub network or an entity connecting said sub network with said further network entity in said communications network.

According to an embodiment of the present invention, said network entity is a network element (i.e., element of said communications network), such as a base station (BS), a gateway (GW), an user equipment (UE), a client, a server, or a proxy.

According to an embodiment of the present invention, said further network entity is a network entity according to claim 1.

Furthermore, the object of the present invention is achieved by a method for controlling congestions in a communications network, wherein said method comprises:
- providing of congestion information concerning a sub network of said communications network, in which a congestion is occurred, to a network entity, which enables communication from and/or to said sub network in said communications network; and
- changing limit of communications capacity of at least one communicating network entity of said sub network of said communications network, which uses a congested resource of said sub network of said communications network and/or which is cause for said congestion, by said network entity by use of said congestion information.

By use of the present invention, in congestion situations, the core network (CN) can start to limit data usage for those UEs that are causing the congestion. Core network does not need to measure all the traffic in that it is transmitting, but it can concentrate to the traffic that is causing the problem. In this way, it is allowed that the traffic is transmitted in low load situation. In overload situations, causes for the overload situations can be identified and the core network can limit traffic for such users only that are using the congested resource. Furthermore, adding of historical data to congestion information allows to act and to handle the congestion situation fairly between users or UEs respectively. Additionally, sending of historical data, i.e., information about usage of resources in a congested part or sub network of the communications network while a certain period of time, allows to easily downgrade data usage for certain network entities using data in a heavy way, i.e., requiring the most of the available capacity for communication in the communications network.

Thus, the present invention enables a clearly improved handling or controlling of congestion situations, which is more flexible and more efficient.

### BRIEF DESCRIPTION OF THE DRAWINGS

The present invention will be understood more clearly from the following description of the preferred embodiments of the invention read in conjunction with the attached drawings, in which:Fig. 1 shows an architecture of a communications network according to state of art;
Fig. 2 shows an architecture of a communications network, in which the present invention can be implemented;
Fig. 3 shows exemplary sources of a congestion in a communications network which can be handled according to the present invention;
Fig. 4 shows a situation in which a cell of a communications network is congested, wherein the handling of the congestion is implemented according to an embodiment of the present invention;
Fig. 5 shows a part of a communications network in which a base station is connected to multiple gateways and for which a congestion is handled according to an embodiment of the present invention;
Fig. 6 shows a part of a communications network in which a base station is shared between different operators and for which a congestion is handled according to an embodiment of the present invention;
Fig. 7a shows handling of capacities of a BS by use of hard license control;
Fig. 7b shows handling of capacities of a BS by use of soft license control;
Fig. 8 shows structure of a network entity configured for controlling congestions in a communications network according to an embodiment of the present invention; and
Fig. 9 shows structure of a further network entity configured for controlling congestions in a communications network according to an embodiment of the present invention.

### DESCRIPTION OF THE PREFERRED EMBODIMENTS

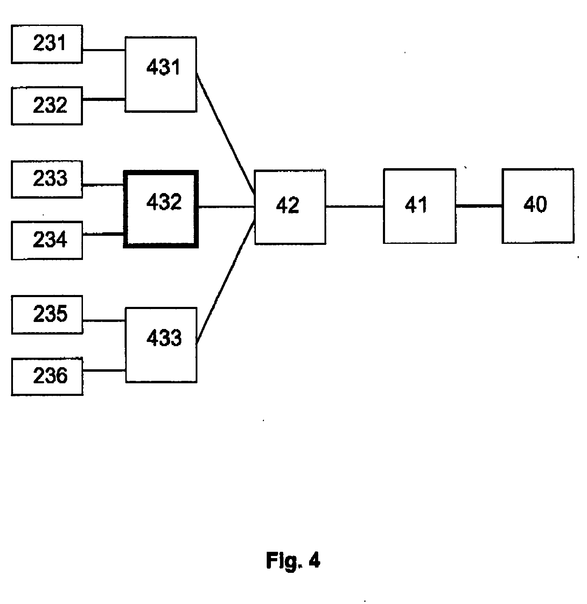

Fig. 4 shows a situation in which a cell of a communications network is congested, wherein the handling of the congestion is implemented according to an embodiment of the present invention.

According to Fig. 4, UEs 231 to 236 are located in several cells 431, 432, 433 of a BS 42 and are connected to the BS 42. The BS 42 is connected to a GW 41, which is connected to a CN 40 and which connects the BS 42 to the CN 40.

If the cell 432 is congested, according to the present embodiment the BS 40 sends congestion information to CN 40 indicating that resource 432 of the communications network (i.e., the cell 432) is congested.

The congestion in the cell 432 leads to a congestion situation in a sub network comprising the UEs 233, 234 and the congested resource, the cell 432.

Thus, the congestion information can comprise information about the users of the congested resource, here, UEs 233, 234. In GTP (GPRS Tunnelling Protocol) based case (e.g. in a LTE or I-HSPA (High Speed Packet Access) system), such users or UEs can be identified per GTP tunnel endpoint identifier, for example. Here, several ways of identifying the corresponding UEs 233, 234 are possible.

Further, the BS 42 can send congestion information also per UE 233, 234 or per resource 432 in advance that these UEs 233, 234 are using that resource 432. Transmitting of this information can be done before occurrence of the congestion or during that. In case of the congestion, BS 42 will inform the CN 40 about the congestion in the corresponding resource of the communications network.

According to a further embodiment of the present invention, the congestion information can comprise information about how the resources of a corresponding sub network have used the capacities of the communications network available to the resources.

Here, the BS 42 can also send some historical data about the usage in the resources of the communications network, e.g., in the cells 431, 432, and/or 433. This information or historical data can indicate, for example, which UEs 231 to 236 have used the corresponding resource 431, 432, 433 heavily while a certain period of time. Further, this information can also indicate, when the resource has been used per user or UE 231 to 236 respectively while the certain period of time.

According to a further embodiment, the BS 42 can also allow collecting information from multiple GWs for same UE and BS.

To enable the providing or transmitting of congestion information in a more comfortable and effective way, a proxy function can be embedded at the BS. This proxy function can translate the UE mobility characteristics (high speed or low speed), connectivity characteristic (heavily shadowed or good throughput, especially for nomadic users) and the statistics of the current load over the involved radio cell. Thus, the BS is then able to map the above given information to user classifications, e.g., heavy user, medium user. Notice that such mapping is beneficial since the core has no idea of radio.

Additionally, with in the congestion information the BS 42 can indicate also the level of the congestion. In particular, the BS 42 can provide with the congestion information an indication of the degree of the congestion, i.e., how much badly the resource 432 is congested. In simplified implementation, for example, the level or degree of the congestion may have the value ON or OFF.

In general, the BS 42 comprises an information providing module for transmitting the congestion information to the CN 40. The congestion information comprises information about the used resources versus available resources in the congested area or sub network. In particular, the congestion information comprises information about the capacity or the corresponding sub network, the concurrent resource usage in the corresponding sub network and the reason of the congestion. By use of this congestion information, the CN 40 can start changing of limitations set with regard to communications capacities for such network entities, which are active in the usage of the congested resource 432 usage, here, UEs 233, 234.

According to the present embodiment, the changing of limitations set to communications capacities will comprise limiting of the communications capacities of the UEs 233, 234. Thus, the communications capacities of the UEs 233, 234 will be decreased.

In particular, to change limitations set to communications capacities of the UEs 233, 234, the CN 40 comprises a communication capacity changing module. The communication capacity changing module is configured to analyze the received congestion information and to initiate corresponding changes of capacity limitations. According to the present embodiment, the CN 40 transmits to the BS 42 an instruction to decrease the capacities of the UEs 233, 234, and the BS 42 performs the decreasing of the capacities of the UEs 233, 234 as ordered by the CN 40.

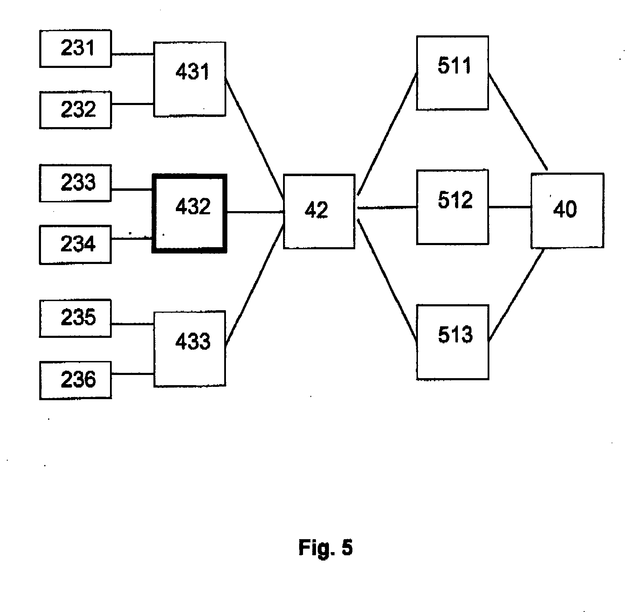

Fig. 5 shows a part of a communications network in which a BS is connected to multiple GWs and for which a congestion event is handled according to an embodiment of the present invention.

In particular, according to Fig. 5 the BS 42 is connected to several GWs 511, 512, 513, which in turn are connected to CN 40. A congestion event is occurred in cell 432 of the BS 42, wherein the BS 42 has three cells 431, 432, 433 according to the present embodiment. Each of the cells 431, 432, 433 comprises corresponding UEs 231 to 236 connected to the BS 42.

The BS 42 can receive data from multiple sources and it possible that some of the GWs 511, 512, 513 or UEs 231 to 236 in that GNs 511, 512, 513 are root causes for the congestion.

Here, in addition to informing CN 40 about the congestion situation, the BS 42 can inform also all or some further BS about the congestion by providing the congestion information to these BS. In particular, the BS 42 informs the further BS of what kind of role the congesting GW 511, 512, 513 and UEs 231 to 236 using the congesting GW 511, 512, 513 have for the congestion.

If one of UEs 231 to 236 has high PDP (Packet Data Protocol) context, it may be served by different GWs 511, 512, 513. However, if a heavy loading RAB (Radio Access Barrier) is identified, the corresponding UE 231 to 236 is served by one GW of GWs 511 to 513 only. The GW, by which the corresponding UE is served, is usually not changed (however, it may be changed in a LTE system, for example).

According to the present embodiment, the congestion avoidance mechanism is implemented as follows: heavy users or UEs 231 to 236, using communications network resources heavy, are separated from moderate users or UEs 231 to 236, using resources of the communications network in a moderate way, among different GWs 511, 512, 513; furthermore, RABs of heavy users or UEs 231 to 236 are distributed among different GWs 511, 512, 513.

In this way, a situation can be identified according to which, e.g., one heavy user or UE sends data by use of GW 511, and 30 moderate users or UEs send data by use of GW 512 and GW 513.

Congestion indication or congestion information respectively can comprise the following data and information, for example:
- GW 511:
   - resource 432 is overloaded by 25%,
   - GW 511 uses 70% of resource 432,
   - 5% of users of GW 511 are users of resource 432,
   - Portion of the allowed resource (at 432) use in congestion situation 432 of GW 511 is set to, e.g., 40% controlled by the BTS
- GW 512
   - resource 432 is overloaded by 25%,
   - GW 512 uses 25% of resource 432,
   - 80% of users of GW 512 are users of resource 432,
   - Portion of the allowed resource (at 432) use in congestion situation 432 of GW 512 is set to, e.g., 30%.
- GW 513
   - resource 432 is overloaded by 25%,
   - Since we are aware that GW 513 is under limit, no action is needed

The BS 42, being the entity of the sub network in which the congestion is occurred, can send the congestion information as provided exemplary above or a simplified version of this information to the CN 40. The thresholds set to use of resources and to allocated capacity can be an internal info in BS 42 or they can be provided to the CN 40.

By use of this information, it becomes possible to change limits of communications capacity for the correct users or UEs respectively.

In a downlink situation, the BS 42 can transmit a message to the congested GW 511, 512, 513, which comprises a proposal, how the limits of communication capacities can be changed. The congested GW 511, 512, 513 transmits the message to the CN 40, and CN 40 transmits after analyzing of the congestion information and after analyzing the proposal of the BS 42 an instruction to decrease the capacity used by the BS 42 at the congested GW 511, 512, 513. The congested GW 511, 512, 513 receives the instruction of the CN 40 and performs a self-configuration by performing a reference portion configuration commando according to which the reference portion of the GW capacity used by the BS 42 connected to the congested GW 511, 512, 513 is limited or decreased as instructed by the CN 40.

In an uplink situation, the GW 511, 512, 513 can transmit the congestion information to the CN 40. Based on the congestion information, the CN 40 meets a decision with regard to limitation of capacity of the BS 42 and transmits a corresponding message with a corresponding instruction to the GW 511, 512, 513. The GW 511, 512, 513 transmits then an instruction of how to change capacity to the BS 42. The BS 42 performs a self-configuration according to the instruction by performing a reference portion configuration commando according to which the reference portion of the BS capacity used by the GWs 511, 512, 513 connected to the GS 42 is limited or decreased accordingly (as instructed by CN 40).

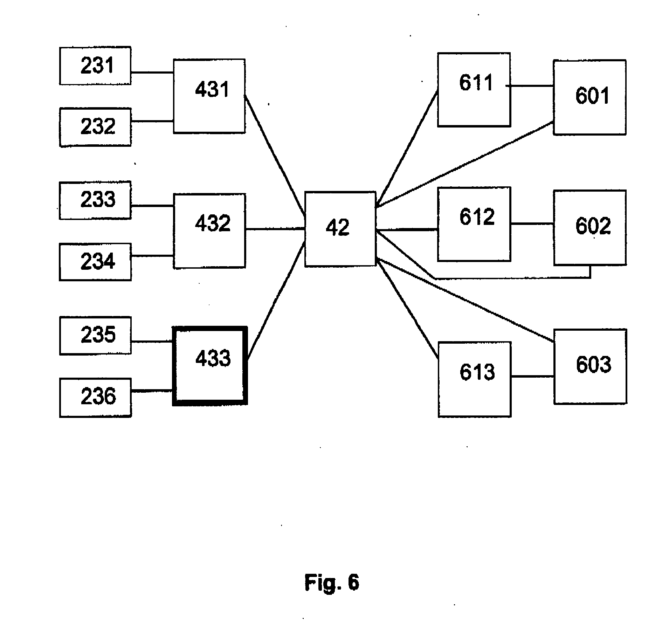

Fig. 6 shows a part of a communications network in which a BS 42 is shared between different operators 611, 612, 613 and for which a congestion event is handled according to an embodiment of the present invention.

In particular, the BS 42 has three cells 431, 432, 433 in which the corresponding UEs 231 to 236 are located, said UEs 231 to 236 being connected to the BS 42 and communicating in the communications network through the BS 42. According to the present embodiment, the BS 42 is shared between three operators 611, 612, 613. Each of the operators 611, 612, 613 is connected to a corresponding CNs 601, 602, 603, wherein also the BS 42 is arranged for communications with, i.e., connected to the corresponding CNs 601, 602, 603.

It has to be pointed out that also the operators 611, 612, 613 have their limitations with regard to communication in the communications network (e.g., transport limitations, capacity limitations etc.). These limitations of the operators 611, 612, 613 occur also with regard to use of BS 42 by the operators 611, 612, 613. Thus, for example, each of the operators 611, 612, 613 has its specific or predefined capacity limitations with regard to communication in the communications network by use of BS 42. Here, a specific or predefined amount of data can be transferred through the BS 42 when performing communication through the corresponding operator 611, 612, 613. As according to the present embodiment the BS 42 comprises three cells 431, 432, 433, a specific or predefined amount of data can be transferred through the cells 431, 432, 433 of the BS 42 when performing communication through the corresponding operator 611, 612, 613 in the communications network.

Further, each of the operators 611, 612, 613 can use a single or multiple GWs to send the data. In Fig. 6, the corresponding GWs are not visualized to keep the structure of Fig. 6 clearly represented.

When handling congestion situations, similar approach as presented with regard to Fig. 5 can be used. Additionally, BS 42 can include additional resource checking for the operators.

In Fig. 6, a situation is visualized in which resources of the cell 433 are overloaded. In particular, according to the present embodiment operators 611 and 612 are using too much resources of the cell 433 (i.e., more resources than pre-set or pre-defined for the corresponding operators 611 and 612). Therefore, according to the present embodiment, congestion indication should be send only to those operators 611, 612, wherein the congestion information should indicate that only UEs 235, 236 using resources in cell 433 are involved in the congestion situation. As cause of congestion the cell 433 and/or the operators 611, 612 can be indicated in the congestion information.

When the congestion has been identified by the BS 42, the BS 42 will send a set of congestion information, e.g. congestion state indication and overload status, to the corresponding CNs 601, 602 according to the present embodiment. The CNs 601, 602 analyze then the congestion situation. Subsequently, each of the CNs 601,602 send an instruction message instructing the BS 42 to set soft licences at the BS 42 for the corresponding operators 611 and 612 connected to the CNs 601 or 602. When receiving the instruction messages, the BS 42 sets soft licences for the operators 611, 612 as instructed by the CNs 601, 602. Here, the capacity for each of the operators 611, 612 will be increased to a certain amount, defined by the corresponding CN 601, 602 in the corresponding instruction message, for a certain period of time, also defined by the corresponding CN 601, 602 in the corresponding instruction message.

As explained above, each of the operators 611, 612, 613 can use a pre-defined amount of capacity at the BS 42. This is ensured by defining corresponding licences of usage for each of the operators 611, 612, 613. However, if more capacity is required by an operator 611, 612, 613 at the BS 42 for a certain period of time and if use of more capacity is possible at the BS 42, setting of soft licences enables changing of the pre-defined or pre-set capacity limits by increasing them for a certain period of time. In this way, the situation of congestion caused by an operator 611, 612, 613 at a certain resource of communications network (here, cell 433) for a part or sub network of the communications network (here, UEs 235, 236, cell 433, and BS 42) can be overcome.

However, if increasing of the limit of capacity is not possible, the congestion situation can be handled as explained by example of Fig. 5, as the BS 42 is connected by at least one GW (not shown in Fig. 6 for sake of simplicity) to the corresponding CNs 601, 602, 603.

By use of soft licences, converting of heavy users or UEs 235, 236 to moderate users of UEs 235, 236 is enabled.

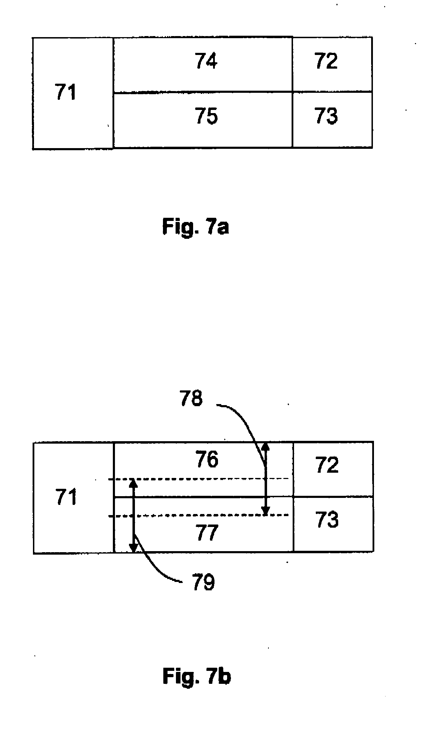

Fig. 7a and Fig. 7b show handling of capacities of a BS by setting licences. In particular, in Fig. 7a handling of capacities of a BS by use of hard licence control is visualized and in Fig. 7b handling of capacities of a BS by use of soft licence control is visualized.

In network sharing case, a manufacture can sell a BS configured for soft licensing for different operators to enable capacity sharing between the different operators in a communications network. Usually, for each operator a limit for use of capacities at the BS is set. In particular, the setting of the limit is implemented by licensing or reserving a certain amount of capacity of the BS for a certain operator.

Performing hard licence control is shown in Fig. 7a. Here, a BS specific capacity limit for a cell 71, a capacity limit 72 for a first operator, and a capacity limit 73 for a second operator are visualized. The hard licence control 74 directed to the first operator controls that the predefined capacity limit 72 for the first operator is not exceeded by the first operator when using the cell 71 of the BS. Similarly, the hard licence control 75 directed to the second operator controls that the predefined capacity limit 73 for the second operator is not exceeded by the second operator when using the cell 71 of the BS.

Performing soft licence control is shown in Fig. 7b. In general, similar to situation visualized in Fig. 7a, each operator is allowed to use the capacity until the pre-set or pre-defined limit of capacity 72, 73. However, during congestion control stage, each operator is allowed to utilise the BS resource till the maximum soft license controlled range. Thus, by use of soft licence control 76 for the first operator its limit 72 of capacity can be increased as visualized by arrow 78, if a corresponding soft licence has been set for usage of BS specific capacity limit for the cell 71. Similarly, by use of soft licence control 77 for the second operator its limit 73 of capacity can be increased as visualized by arrow 79, if a corresponding soft licence has been set for usage of BS specific capacity limit for the cell 71.

Here, if the sum of traffic of both operators reaches the maximum capacity of the BS, the capacity can be proportionally shared between the two operators by comparing the corresponding soft license controls 76 and 77.

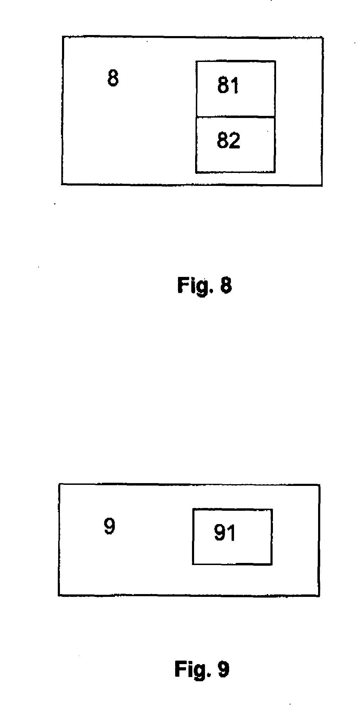

Fig. 8 shows structure of a network entity 8 configured for controlling congestions in a communications network according to an embodiment of the present invention.

The network entity 8 comprises a receiving module 81 and a communications capacity limit changing module 82. The receiving module 81 is configured for receiving a congestion information arranged as explained exemplary above, i.e., characterizing a congested part or sub network of the communications network. The communications capacity limit changing module 82 is configured for changing a limit of a communications capacity of at least one communicating network entity of the congested sub network of said communications network by use of said congestion information, wherein the communicating network entity uses a congested resource of said the congested sub network and/or is cause for the congestion.

The network entity 8 configured for changing limits of communications capacities of corresponding entities of the congested sub networks is an entity enabling communication from and/or to said sub network in said communications network. As explained exemplary above the network entity 8 can be a CN. However, the network entity 8 can be also an operation and maintenance (O&M) sub system entity or a mobility management entity (MME). Thus, the congestion information can be sent also to correspondingly arranged O&M sub system entities or MMEs for controlling a congestion situation in a part or sub network of the communications network according to the present invention. When considering the embodiments of the present invention provided above, also O&M sub systems or MMEs can be used instead of CNs.

Fig. 9 shows structure of a further network entity 9 configured for controlling congestions in a communications network according to an embodiment of the present invention.

In particular, the network entity 9 comprises an information providing module 91 which is configured to provide congestion information concerning a part or sub network of the communications network, in which a congestion is occurred, to a further network entity, which enables communication from and/or to the congested part or sub network in the communications network. As explained above, the network entity 9 can be a BS or GW of the communications network connecting the congested part or sub network to further parts of the communications network and enabling communication from and/or to the congested part or sub network in the communications network. The network entity 9 provides the congestion information to the further network entity like the network entity 8 after the network entity 9 has identified or detected the congestion situation in the communications network.

Thus, the present invention refers to controlling of congestions in a communications network, according to which congestion information concerning a sub network of said communications network, in which a congestion is occurred, is provided to a network entity, which enables communication from and/or to said sub network in said communications network; and limit of communications capacity of at least one communicating network entity of said sub network of said communications network, which uses a congested resource of said sub network of said communications network and/or which is cause for said congestion, is changed by said network entity by use of said congestion information.

When considering embodiments and applications of this invention shown and described above, it should be apparent to a person skilled in the art that many more modifications (than mentioned above) are possible without departing from the inventive concept described herein. Therefore, the present invention is not restricted to the above presented embodiments only and can vary within the scope of the claims. Thus, it is intended that the foregoing detailed description should be regarded as illustrative rather than limiting and that it should be understood that the following claims include all equivalents described in these claims, which are intended to define the scope of the present invention. Further, it has to be pointed out, that the foregoing description is not intended to disavow the scope of the invention as claimed or to disavow any equivalents thereof.

Thus, for example, the present invention is directed to communications networks based on architecture as shown exemplary in Fig. 2, however, the present invention can be implemented also in communications networks with a strongly hierarchical architecture as provided exemplary in Fig. 1. Thus, the present invention can be used and implemented in plurality of different communications networks.
Further, the embodiments presented above used examples visualized situations in which one cell only is congested. Here, it has to be pointed out that according to the present invention also such situations can be handled, in which more than one resource of a BS is congested. The present invention is applied to all congested resources as described exemplary above. Additionally, it is also possible to indicate that a BS as such is congested and that the congestion is not specific to any certain user.

Moreover, core network, O&M subsystem entities or MMEs may have tools for identifying of different traffic types (e.g. p2p, VoIP, etc) even inside the same traffic class or QoS parameters that have been send to a BS. By use of such tools, a more fair use or allocations of resources in the congested part of the communications network becomes possible.
Further, in case of multiple operators the air interface and/or BS resources can be used fully, but in overload situations it can be guaranteed that all the operators get the agreed minimum part of resources controlled by use of soft licensing methodologies.

### List of references

- 1: architecture
- 10: core network level
- 101: core network
- 11: gateway node level
- 111: gateway
- 112: gateway
- 12: base station level
- 121: base station
- 122: base station
- 123: base station
- 124: base station
- 13: user equipment level
- 131: user equipment
- 132: user equipment
- 133: user equipment
- 134: user equipment
- 2: architecture
- 201: core network
- 202: core network
- 211: gateway
- 212: gateway
- 213: gateway
- 221: base station
- 222: base station
- 223: base station
- 231: user equipment
- 232: user equipment
- 233: user equipment
- 234: user equipment
- 235: user equipment
- 236: user equipment
- 237: user equipment
- 311 - 316: user equipment limitations
- 321: cell limitation
- 322: cell limitation
- 323: cell limitation
- 33: hardware limitation
- 34: capacity licences
- 35: software limitations
- 36: transport limitations
- 37: base station limitations
- 40: core network
- 41: gateway
- 42: base station
- 431: cell of a base station
- 432: cell of a base station
- 433: cell of a base station
- 511: gateway
- 512: gateway
- 513: gateway
- 601: core network
- 602: core network
- 603: core network
- 611: operator
- 612: operator
- 613: operator
- 71: base station specific capacity limit for a cell of the base station
- 72: capacity limit for an operator
- 73: capacity limit for an operator
- 74: hard licence control
- 75: hard licence control
- 76: soft licence control
- 77: soft licence control
- 78: increase of capacity
- 79: increase of capacity
- 8: network entity
- 81: receiving module
- 82: communications capacity limit changing module
- 9: network entity
- 91: information providing module

## Claims

1. A network entity, said network entity being configured for controlling congestions in a communications network, wherein said network entity comprises:
- a receiving module, wherein said receiving module is configured for receiving congestion information concerning a sub network of said communications network, in which a congestion is occurred; and
- a communications capacity limit changing module, wherein said communications capacity limit changing module is configured for changing a limit of a communications capacity of at least one such communicating network entity of said sub network of said communications network, which uses a congested resource of said sub network of said communications network and/or which is cause for said congestion, by use of said congestion information;
said network entity being an entity enabling communication from and/or to said sub network in said communications network.

2. The network entity according to claim 1, wherein said communications capacity limit changing module is configured for changing communication capacity by at least one of the following:
- configuring of reference portion of capacity of a base station used by gateways connected to the base station;
- configuring of reference portion of capacity of a gateway used by base stations connected to said gateway;
- allocating at least one soft licence to a network entity of said sub network, shared by such entities of said sub network data communication of which leads to said congestions;
- configuring of reference portion of capacity of a client connected to a server; or
- configuring of the capacity portions or absolute values between a server and its connected clients.

3. The network entity according to claim 1 or 3, wherein said network entity is a core network, an operation and maintenance subsystem entity, or a control plane gateway with mobility management function in said communications network.

4. A network entity, said network entity being configured for controlling congestions in a communications network, wherein said network entity comprises an information providing module, wherein said information providing module is configured to provide congestion information concerning a sub network of said communications network, in which a congestion is occurred, to a further network entity, which enables communication from and/or to said sub network in said communications network.

5. The network entity according to claim 4, wherein said congestion information comprises information about:
- the cause of congestion in said sub network of said communications network;
- capacity of said sub network of said communications network; and
- use of resources of said communications network in said sub network of said communications network.

6. The network entity according to claim 4 or 5, wherein said congestion information comprises information about user equipment entities in said sub network.

7. The network entity according to at least one of claims 4 to 6, wherein said congestion information comprises informtion about usage of resources in said sub network while a certain period of time.

8. The network entity according to at least one of the preceding claims 4 to 7, wherein said network entity is an entity of said sub network or an entity connecting said sub network with said further network entity in said communications network.

9. The network entity according to at least one of the preceding claims 4 to 8, wherein said network entity is a base station, a gateway, an user equipment, a client, a server, or a proxy.

10. The network entity according to at least one of the preceding claims 4 to 9, wherein said further network entity is a network entity according to claim 1.

11. A method for controlling congestions in a communications network, wherein said method comprises:
- providing of congestion information concerning a sub network of said communications network, in which a congestion is occurred, to a network entity, which enables communication from and/or to said sub network in said communications network; and
- changing limit of communications capacity of at least one communicating network entity of said sub network of said communications network, which uses a congested resource of said sub network of said communications network and/or which is cause for said congestion, by said network entity by use of said congestion information.
